(19)

Europäisches
Patentamt
European
Patent Office
Office européen
des brevets

(11) **EP 4 668 597 A1**

(12) **EUROPEAN PATENT APPLICATION**
published in accordance with Art. 153(4) EPC

(43) Date of publication:
**24.12.2025 Bulletin 2025/52**

(21) Application number: **23922035.3**

(22) Date of filing: **17.02.2023**

(51) International Patent Classification (IPC):
**H04B 7/06** (2006.01)

(52) Cooperative Patent Classification (CPC):
**H04B 7/06**

(86) International application number:
**PCT/CN2023/076971**

(87) International publication number:
**WO 2024/168904 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **PERFORMANCE MONITORING METHODS FOR AI MODEL, APPARATUS, DEVICE, AND
STORAGE MEDIUM**

(57) The present disclosure relates to the technical field of communications. Disclosed are performance monitoring methods for an AI model, an apparatus, a device, and a storage medium. The AI model comprises a first model and a second model, the first model and the second model being deployed on a terminal device, and the second model being deployed on a network device. A method comprises: reporting a performance monitoring value of the second model, or reporting related information used for calculating the performance monitoring value, or reporting performance monitoring indication information. The method may provide a solution in respect of performance monitoring of an AI model; and the terminal device reports the performance monitoring value of the second model in the AI model, or reports the related information for calculating the performance monitoring value, or reports the performance monitoring indication information, such that the network device or the terminal device may perform performance monitoring on the AI model, thereby ensuring the model performance of the AI model.

FIG. 2

EP 4 668 597 A1

## Description

### TECHNICAL FIELD

The present disclosure relates to the field of communication technologies, and more particularly relates to a method for monitoring a performance of an artificial intelligence (AI) model, an apparatus for monitoring a performance of an AI model, devices and a storage medium.

### BACKGROUND

Currently, AI technologies may also be applied in the field of wireless communications. By deploying a channel status information (CSI) compression model in a terminal and a CSI recovery model in a network device, an artificial intelligence/machine learning (AI/ML) model is formed to compress and recover downlink channel information, to reduce the compression overhead of the terminal or to improve the compression accuracy of CSI.

In the procedure of applying the AI/ML model, the model performance corresponding to the trained AI/ML model may also change due to the change in the channel environment. When the model performance is too low, the compression overhead of the terminal may be increased, or the compression accuracy of the CSI may be reduced.

### SUMMARY

Embodiments of the present disclosure provide a method for monitoring a performance of an AI model, an apparatus for monitoring a performance of an AI model, devices and a storage medium, which may provide solutions for monitoring the performance of the AI model. The technical solutions are as follows.

According to an aspect of the present disclosure, a method for monitoring a performance of an AI model is provided, which is performed by a terminal, where the AI model includes a first model and a second model, the terminal is deployed with the first model and the second model, and a network device is deployed with the second model, and the method includes: reporting a performance monitoring value of the second model, relevant information for calculating a performance monitoring value of the second model, or performance monitoring indication information to the network device.

According to an aspect of the present disclosure, a method for monitoring a performance of an AI model is provided, which is performed by a terminal, where the AI model includes a first model and a second model, the terminal is deployed with the first model, and a network device is deployed with the second model, and the method includes: reporting relevant information for calculating a performance monitoring value of the second model to the network device.

According to an aspect of the present disclosure, a method for monitoring a performance of an AI model is provided, which is performed by a network device, where the AI model includes a first model and a second model, a terminal is deployed with the first model and the second model, and the network device is deployed with the second model, and the method includes: receiving a performance monitoring value of the second model reported by the terminal; or receiving relevant information for calculating a performance monitoring value of the second model, and calculating the performance monitoring value of the second model based on the relevant information; or receiving performance monitoring indication information.

According to an aspect of the present disclosure, a method for monitoring a performance of an AI model is provided, which is performed by a network device, where the AI model includes a first model and a second model, a terminal is deployed with the first model, and the network device is deployed with the second model, and the method includes: receiving relevant information for calculating a performance monitoring value of the second model reported by the terminal; and calculating the performance monitoring value of the second model based on the relevant information.

According to an aspect of the present disclosure, an apparatus for monitoring a performance of an AI model is provided, where the AI model includes a first model and a second model that are deployed in the apparatus, the second model is deployed in a network device, and the apparatus includes: a reporting module configured to report a performance monitoring value of the second model, relevant information for calculating a performance monitoring value of the second model, or performance monitoring indication information to the network device.

According to an aspect of the present disclosure, an apparatus for monitoring a performance of an AI model is provided, where the AI model includes a first model deployed in the apparatus and a second model deployed in a network device, and the apparatus includes: a reporting module configured to report relevant information for calculating a performance monitoring value of the second model to the network device.

According to an aspect of the present disclosure, an apparatus for monitoring a performance of an AI model is provided, where the AI model includes a first model and a second model that are deployed in a terminal, the second model is deployed in the apparatus, and the apparatus includes: a receiving module configured to receive a performance monitoring value of the second model reported by the terminal; or a receiving module further configured to receive relevant information for calculating a performance monitoring value of the second model, and calculate the performance monitoring value of the second model based on the relevant information; or a receiving module further configured to receive performance monitoring indication information.

According to an aspect of the present disclosure, an apparatus for monitoring a performance of an AI model is provided, where the AI model includes a first model deployed in a terminal and a second model deployed in the apparatus, and the apparatus includes: a receiving module configured to receive relevant information for calculating a performance monitoring value of the second model reported by the terminal; and a calculating module configured to calculate the performance monitoring value of the second model based on the relevant information.

According to an aspect of the present disclosure, a terminal is provided, which includes: a processor and a transceiver connected to the processor. The processor is configured to load and execute executable instructions to implement the method for monitoring the performance of the AI model described above.

According to an aspect of the present disclosure, a network device is provided, which includes: a processor and a transceiver connected to the processor. The processor is configured to load and execute executable instructions to implement the method for monitoring the performance of the AI model described above.

According to an eighth aspect of the present disclosure, a computer-readable storage medium is provided, which has stored therein a computer program that, when executed by a processor, causes the method for monitoring the performance of the AI model described above to be implemented.

According to a tenth aspect of the present disclosure, a computer program product or a computer program is provided, which includes computer instructions stored in a computer-readable storage medium that, when read and executed by a processor from the computer-readable storage medium, are configured to implement the method for monitoring the performance of the AI model described above.

The technical solution provided in the embodiments of the present disclosure may have the following beneficial effects. Solutions are provided for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

## BRIEF DESCRIPTION OF THE DRAWINGS

In order to more clearly illustrate the technical solutions in the embodiments of the present disclosure, the accompanying drawings to be used in the description of embodiments are briefly introduced below. Apparently, the drawings in the following description only show some embodiments of the present disclosure. For those of ordinary skill in the art, other drawings may also be obtained according to these drawings without any creative labor.

FIG. 1 is a schematic diagram of a method for monitoring a performance of an AI model provided in an illustrative embodiment of the present disclosure.

FIG. 2 is a block diagram of a communication system provided in an illustrative embodiment of the present disclosure.

FIG. 3 is a flow chart of a method for monitoring a performance of an AI model provided in an illustrative embodiment of the present disclosure.

FIG. 4 is a flow chart of a method for monitoring a performance of an AI model provided in an illustrative embodiment of the present disclosure.

FIG. 5 is a flow chart of a method for monitoring a performance of an AI model provided in an illustrative embodiment of the present disclosure.

FIG. 6 is a flow chart of a method for monitoring a performance of an AI model provided in an illustrative embodiment of the present disclosure.

FIG. 7 is a flow chart of a method for monitoring a performance of an AI model provided in an illustrative embodiment of the present disclosure.

FIG. 8 is a flow chart of an interaction between a terminal and a network device provided in an illustrative embodiment of the present disclosure.

FIG. 9 is a flow chart of an interaction between a terminal and a network device provided in an illustrative embodiment of the present disclosure.

FIG. 10 shows a block diagram of an apparatus for monitoring a performance of an AI model provided in an illustrative embodiment of the present disclosure.

FIG. 11 shows a block diagram of an apparatus for monitoring a performance of an AI model provided in an illustrative embodiment of the present disclosure.

FIG. 12 shows a block diagram of an apparatus for monitoring a performance of an AI model provided in an illustrative embodiment of the present disclosure.

FIG. 13 shows a block diagram of an apparatus for monitoring a performance of an AI model provided in an embodiment of the present disclosure.

FIG. 14 shows a schematic block diagram of a communication device provided in an illustrative embodiment of the present disclosure.

## DETAILED DESCRIPTION

In order to make objectives, technical solutions and advantages of the present disclosure clearer, embodiments of the present disclosure are further described in detail below in combination with the accompanying drawings.

Reference is made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects of the present disclosure as recited in the appended claims.

Terms used in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be noted that user information (including, but not limited to, user device information, user personal information, and the like) and data (including, but not limited to, data used for analysis, stored data, displayed data, and the like) involved in the present disclosure are all authorized by users or fully authorized by all parties, and the collection, use and processing of relevant data must comply with relevant laws, regulations and standards of relevant countries and regions.

It should be understood that, although terms such as "first" and "second" may be used in the present disclosure for describing various information, these information should not be limited by these terms. These terms are only used for distinguishing information of the same type from each other. For example, a first parameter may also be referred to as a second parameter, and similarly, the second parameter may also be referred to as the first parameter, without departing from the scope of the present disclosure. As used herein, the term "if" or "in a case where" may be construed to mean "when", "upon" or "in response to determining" depending on the context.

First, some technical knowledge involved in the present disclosure is introduced.

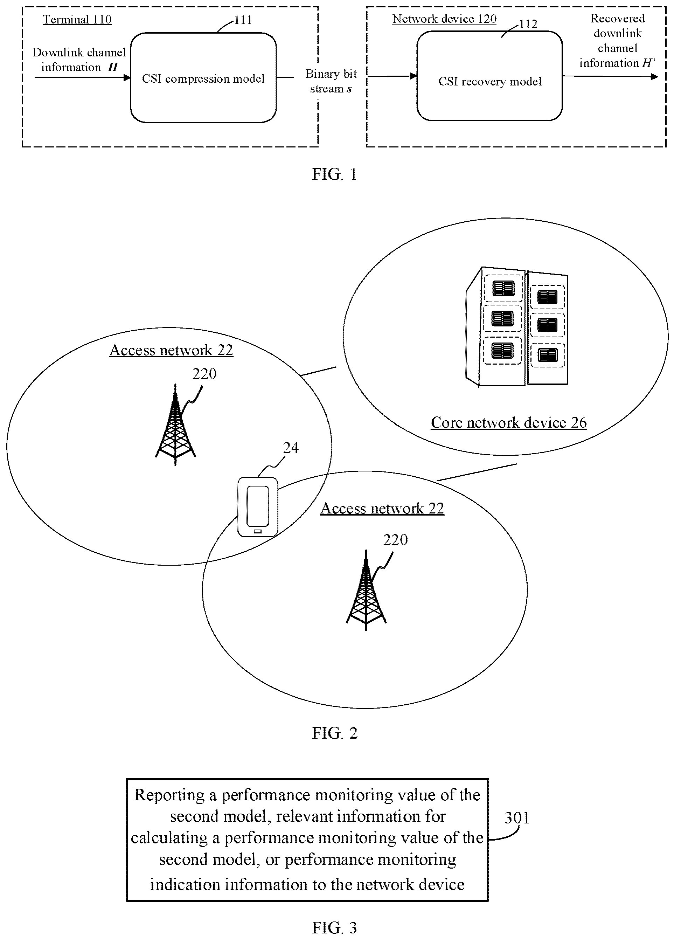

Currently, AI technologies may also be applied in the field of wireless communications. Compared with traditional technical means, AI technologies may also achieve good results. Current research and simulation results show that the use of AI technologies may reduce the feedback overhead of the terminal or improve the feedback accuracy of CSI. In the 3GPP standardization research, a bilateral or two-sided AI/ML model based on a CSI compression model at the terminal side and a CSI recovery model at the network device side has been developed to achieve the compression feedback and recovery of the CSI, respectively. In an illustrative manner, reference is made to FIG. 1, which shows a flow chart of a method for monitoring a performance of an AI model provided in an illustrative embodiment of the present disclosure. As shown in FIG. 1, a terminal 110 compresses input downlink channel information H via a CSI compression model 111, quantizes the compressed downlink channel information into a binary bit stream, and sends the binary bit stream to a network device 120. The network device 120 recovers it and obtains H' that is approximate to the original downlink information via a CSI recovery model 121.

The CSI compression model and the CSI recovery model need to be trained with the collected data set. Currently, the types of training the CSI compression model and the CSI recovery model include the following three types.

- The training of a model (the CSI compression model or the CSI recovery model) on a single device (such as the terminal or the network device) is completed, and then the trained model is sent to the other device.
- The CSI compression model and the CSI recovery model are trained separately in the terminal and the network device by joint training.
- First, the training of a model on a single device is completed, and then the training data or other auxiliary information is sent to the other device to complete the training of the other model. The training process may be divided into the following two forms.

  1. NW-first training: the network device first trains the CSI compression model and the CSI recovery model, and then sends the data set for training the CSI compression model and/or other auxiliary information to the terminal.
  2. UE-first training: the terminal first trains the CSI compression model and the CSI recovery model, and then sends the data set for training the CSI recovery model and/or other auxiliary information to the network device.

After the bilateral or two-sided model is trained, it is deployed in the terminal and/or the network device. During the application process, the performance of the trained bilateral model changes due to the change in the channel environment. In order to monitor the performance of the bilateral model, there are currently two ways.

- Performance monitoring by the network device: the network devices performs activation/deactivation/updating/switching operations on the bilateral model based on the monitored performance.
- Performance monitoring by the terminal: the terminal monitors the performance and reports the monitoring information to the network device, and then the network device performs activation/deactivation/updating/switching operations on the bilateral model.

The performance of the bilateral network model may be monitored according to the performance monitoring criteria or methods as follows:

- Intermediate key performance indicators (intermediate KPIs), such as the square generalized cosine similarity (SGCS).

The terminal may report the target input CSI (i.e., input-CSI-NW), or the network device may send the target output CSI (i.e., output-CSI-UE) to respectively implement the performance monitoring by the network device or the terminal.

- Final KPIs, such as a block error rate (BLER), an assumed BLER, or an acknowledgement/negative acknowledgement (ACK/NACK) bit.
- Traditional CSI feedback and reporting.

The traditional CSI feedback and reporting include CSI measurements and reporting based on Type I or Type II codebooks, and the codebook type or codebook parameters are configured by the network device for the terminal.

- The input or output data distribution of the bilateral model, such as the data drift between the training data and the output data.

FIG. 2 shows a block diagram of a communication system provided in an illustrative embodiment of the present disclosure. The communication system may include an access network 22, a user terminal 24, and a core network device 26.

The access network 22 includes several network devices 220. The network device 220 may be a base station, which is a device deployed in the access network to provide wireless communication functions for a user terminal (referred to as a "terminal" for short) 24. The base station may include various forms of macro base stations, micro base stations, relay stations, access points, and the like. In systems using different wireless access technologies, the names of devices with functions of the base station may be different. For example, in a long term evolution (LTE) system, the device with functions of the base station is called eNodeB or eNB; and in a 5G new radio (NR) system, the device with functions of the base station is called gNodeB or gNB. As communication technologies evolve, the description of base stations may change. The access network 22 may be constructed using at least one of the dual connectivity technologies of a next generation (NG)-eNB NR dual connectivity (NGEN-DC) and an E-UTRA NR dual connectivity (EN-DC).

The core network includes several core network devices 26. The function of the core network is to be responsible for information exchange, routing, user data management, security, and the like within the system, as well as information exchange and transmissions with other communication systems. The main network functions of a 5G core network (5GC) include an access and mobility management function (AMF), a session management function (SMF), a user plane function (UPF), a network repository function (NRF), a network exposure function (NEF), a unified data management (UDM), a location management function (LMF), and other network functions.

To facilitate the description in the embodiments of the present disclosure, the above-mentioned devices that provide wireless communication functions for the user terminal 24 are collectively referred to as network devices. For example, the network device includes at least one of the network device 220 and the core network device 26.

The user terminal 24 may include various handheld devices, vehicle-mounted devices, wearable devices, computing devices or other processing devices connected to a wireless modem with wireless communication functions, as well as various forms of user equipments, mobile stations (MS), terminal devices, and the like. For the convenience of description, the above-mentioned devices are collectively referred to as user terminals. The network device 220 and the user terminal 24 communicate with each other by some air interface technologies, for example, via a Uu interface.

The technical solutions in the embodiments of the present disclosure may be applied to various communication systems, such as global system of mobile communication (GSM) systems, code division multiple access (CDMA) systems, wideband code division multiple access (WCDMA) systems, general packet radio service (GPRS) systems, long term evolution (LTE) systems, LTE frequency division duplex (FDD) systems, LTE time division duplex (TDD) systems, advanced long term evolution (LTE-A) systems, NR systems, evolution systems of NR systems, LTE-based access to unlicensed spectrum (LTE-U) systems, NR-based access to unlicensed spectrum (NR-U) systems, universal mobile telecommunication systems (UMTSs), worldwide interoperability for microwave access (WiMAX) communication systems, wireless local area network (WLAN) systems, wireless fidelity (Wi-Fi) systems, next generation communication systems or other communication systems, or the like.

Generally, traditional communication systems support a limited number of connections and are easy to implement. However, with the development of communication technologies, mobile communication systems not only support traditional communications, but also support, for example, device to device (D2D) communications, machine to machine (M2M) communications, machine type communications (MTCs), vehicle to vehicle (V2V) communications, vehicle to everything (V2X) systems, and the like. The embodiments of the present disclosure may also be applied to these communication systems.

Reference is made to FIG. 3, which shows a flow chart of a method for monitoring a performance of an AI model provided in an illustrative embodiment of the present disclosure. This embodiment is described by taking the method applied to the terminal in the communication system shown in FIG. 2 as an example. The method may include the following step.

At step 301, a performance monitoring value of a second model, relevant information for calculating a performance monitoring value of a second model, or performance monitoring indication information is reported to a network device.

In an illustrative manner, the AI model includes a first model and the second model, the terminal is deployed with the first model and the second model, and the network device is deployed with the second model.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

In an illustrative manner, the performance monitoring value is used to indicate the quality of the model performance of the AI model.

Optionally, the performance monitoring value is used to perform the performance monitoring on the first model, or used to perform the performance monitoring on the second model, or used to perform the performance monitoring on both the first model and the second model.

In some embodiments, the performance monitoring value is determined based on first data and second data, or the performance monitoring value is determined based on third data and fourth data.

The first data is determined based on an inferred value of a first input value by the second model. The second data is determined based on an output value corresponding to a second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

Optionally, the performance monitoring value includes at least one of the following monitoring value types: 1) the difference between the first data and the second data; 2) the ratio of the first data to the second data; 3) the difference between the third data and the fourth data; 4) the ratio of the third data to the fourth data; 5) a weighted average of the first data and the second data; 6) the average value of the first data and the second data; 7) a weighted average of the third data and the fourth data; or 8) the average value of the third data and the fourth data.

Optionally, the relevant information for calculating the performance monitoring value includes at least one of the following information: 1) the first data; 2) the second data; 3) the third data; 4) the fourth data; 5) a relevant value for calculating the first data, where the relevant value for calculating the first data includes at least one of the input sample or the first input value; or 6) a relevant value for calculating the second data, where the relevant value for calculating the second data includes at least one of the input sample or the second input value.

In an illustrative manner, the performance monitoring indication information indicates the quality of current performance parameters of the first model and/or the second model.

In one example, bit information is used as the performance monitoring indication information. When the value of the bit information is 1, it means that the performance parameters of the first model and/or the second model are better; and when the value of the bit information is 0, it means that the performance parameters of the first model and/or the second model are worse. Alternatively, when the value of the bit information is 0, it means that the performance parameters of the first model are better; and when the value of the bit information is 1, it means that the performance parameters of the second model are worse.

In a feasible situation, the terminal reports the performance monitoring value of the second model to the network device. The network device directly determines the model performance of the second model in the current frequency domain unit based on the performance monitoring value, and performs a management operation on the AI model.

In another feasible situation, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

In another feasible situation, the terminal reports performance monitoring indication information to the network device, and the network device determines the model performance of the first model and/or the second model in the current frequency domain unit based on the performance monitoring indication information, and performs a management operation on the AI model.

The management operation on the AI model includes at least one of types of operations as follows:

- a switching operation on the AI model;
- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

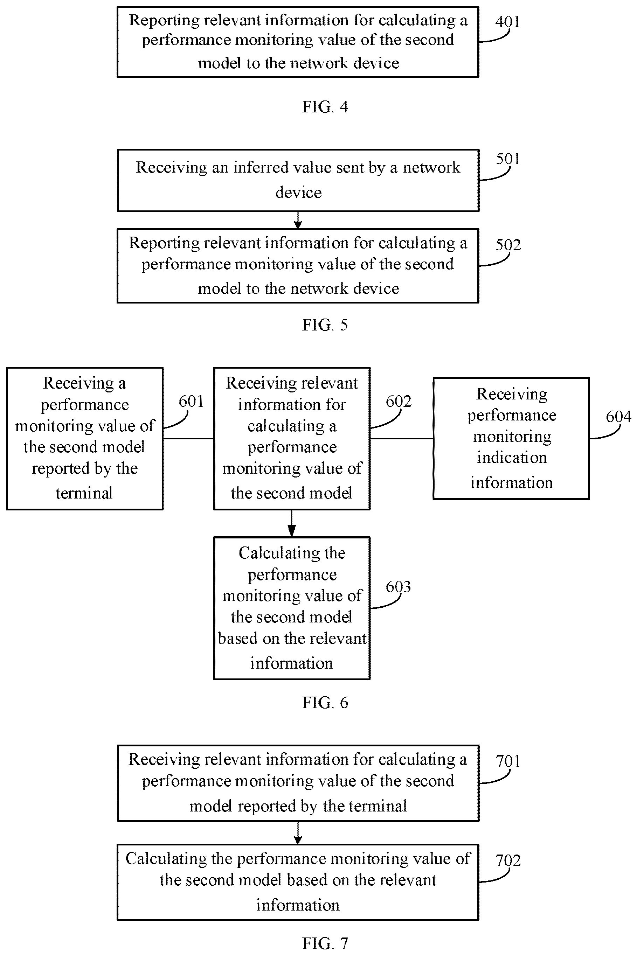

Reference is made to FIG. 4, which shows a flow chart of a method for monitoring a performance of an AI model provided in an illustrative embodiment of the present disclosure. This embodiment is described by taking the method applied to the terminal in the communication system shown in FIG. 2 as an example. The method may include the following step.

At step 401, relevant information for calculating a performance monitoring value of a second model is reported to a network device.

In an illustrative manner, the AI model includes a first model and the second model, the terminal is deployed with the first model, and the network device is deployed with the second model.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

In an illustrative manner, the relevant information for calculating the performance monitoring value of the second model is used to calculate the performance monitoring value of the second model.

Optionally, the relevant information for calculating the performance monitoring value includes at least one of the following information: 1) first data; 2) second data; 3) third data; 4) fourth data; 5) a relevant value for calculating first data, where the relevant value for calculating the first data includes at least one of an input sample or a first input value; or 6) a relevant value for calculating second data, where the relevant value for calculating the second data includes at least one of an input sample or a second input value.

The first data is determined based on an inferred value of the first input value by the second model. The second data is determined based on an output value corresponding to the second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

In another feasible situation, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

The management operation on the AI model includes at least one of types of operations as follows:

- a switching operation on the AI model;
- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In a feasible situation, the terminal reports a relevant value for calculating the performance monitoring value of the second model to the network device. The network device first calculates the performance monitoring value of the second model based on the relevant value for calculating the performance monitoring value, and then performs the above-mentioned management operation on the AI model according to the performance monitoring value.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

In an embodiment, the bilateral model is applied to a channel compression scenario to illustrate the above-mentioned method for monitoring the performance of the AI model. In an illustrative manner, the application of the above steps 301 and 401 to the channel compression scenario is described in detail.

First, the AI model includes a first model and a second model.

In some embodiments, the first model and the second model constitute a bilateral model.

In the scenario where the channel is compressed before a transmission, the first model is implemented as a CSI compression model, which is used to perform the channel compression processing on an input sample (such as downlink channel information H) and output an intermediate value. In one example, the downlink channel information H is input into the first model. The first model compresses the downlink channel information H and then outputs a binary bit stream as an intermediate value by a quantization. The intermediate value serves as the output value corresponding to the input sample and also as the input value of the second model, that is, the binary bit stream is the first input value.

When the first model is implemented as a CSI compression model, the second model is implemented as a CSI recovery model, which is used to perform the channel recovery processing on the binary bit stream output by the first model, and output an output value corresponding to the binary bit stream, that is, the recovered downlink channel information $H'$. The downlink channel information $H$ and the recovered downlink channel information $H'$ are as identical or similar as possible.

In an illustrative manner, the first model is at least deployed in the terminal, and the second model is at least deployed in the network device, that is, the deployment procedure of the first model and the second model includes at least one of the following forms.

- The first model and the second model are deployed in the terminal, and the second model is deployed in the network device.
- The first model is deployed in the terminal, and the second model is deployed in the network device.
- The first model is deployed in the terminal, and the first model and the second model are deployed in the network device.
- The first model and the second model are deployed in the terminal, and the first model and the second model are deployed in the network device.

When the second model is deployed on both the terminal and the network device, the terminal reports the performance monitoring value of the second model to the network device, or reports relevant information for calculating the performance monitoring value of the second model to the network device, or reports performance monitoring indication information to the network device.

When the second model is only deployed in the network device, the terminal reports relevant information for calculating the performance monitoring value of the second model to the network device.

Optionally, the method for monitoring the performance of the AI model includes at least one of the methods as follows:

- Performance monitoring based on intermediate key performance indicators (intermediate KPIs)

For example, the performance monitoring is performed based on the square generalized cosine similarity (SGCS).

- Performance monitoring based on final KPIs

For example, the performance monitoring is performed based on at least one of a throughput, a block error rate (BLER), an assumed BLER, an acknowledgement (ACK) bit, or a negative acknowledgement (NACK) bit corresponding to the second model.

- Performance monitoring based on CSI feedback and reporting

For example, the CSI measurement and reporting are performed based on Type I or Type II codebook parameters, where the codebook parameters or the codebook type are configured by the network device for the terminal.

- Performance monitoring based on the input or output data distribution of the bilateral model

For example, the performance monitoring is performed based on a data drift between the input sample and the output value (including the output value corresponding to the first input value or the output value corresponding to the second input value), where the data drift refers to the deviation degree of the data distribution between the input sample and the output value.

Optionally, the performance monitoring value is used to perform the performance monitoring on the first model, or used to perform the performance monitoring on the second model, or used to perform the performance monitoring on both the first model and the second model.

In an illustrative manner, the performance monitoring value is used to indicate the quality of the model performance of the AI model.

Optionally, the performance monitoring value includes at least one of the following monitoring value types.

1) Difference between first data and second data

The first data is determined based on an inferred value of a first input value by the second model. The second data is determined based on an output value corresponding to a second input value in a case where the second model is not used. The first input value and the second input value correspond to the same input sample. The input sample is an input of the first model.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

2) Ratio of first data to second data

3) Difference between third data and fourth data

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

4) Ratio of third data to fourth data

Optionally, the relevant information for calculating the performance monitoring value includes at least one of the following information: 1) the first data; 2) the second data; 3) the third data; 4) the fourth data; 5) a relevant value for calculating the first data, where the relevant value for calculating the first data includes at least one of the input sample or the first input value; or 6) a relevant value for calculating the second data, where the relevant value for calculating the second data includes at least one of the input sample or the second input value.

In an illustrative manner, the performance monitoring indication information indicates the quality of current performance parameters of the first model and/or the second model.

In one example, bit information is used as the performance monitoring indication information. When the value of the bit information is 1, it means that the performance parameters of the first model and/or the second model are better; and when the value of the bit information is 0, it means that the performance parameters of the first model and/or the second model are worse. Alternatively, when the value of the bit information is 0, it means that the performance parameters of the first model are better; and when the value of the bit information is 1, it means that the performance parameters of the second model are worse. In a feasible situation, the terminal reports the performance monitoring value of the second model to the network device. The network device directly determines the model performance of the second model in the current frequency domain unit based on the performance monitoring value, and performs a management operation on the AI model.

It is worth noting that the abovementioned first data, second data, third data and fourth data are all intermediate KPIs.

The management operation on the AI model includes at least one of types of operations as follows:

- a switching operation on the AI model;
- an activation operation on the AI model;
- a deactivation operation on the AI model;

- updating model parameters of the AI model; or
- falling back to a traditional communication operation without using the AI model.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

In an optional embodiment, each frequency domain unit is implemented as a subband, the number of subbands configured by the network device is $N_3$, and the number of data transmission layers is 1. When the CSI compression model and the CSI recovery model are deployed in the terminal at the same time, the input sample of the CSI compression model is input-CSI-NW, and the model output value of the CSI recovery model is an inferred value output-CSI-UE. That is, data $N$ of at least two frequency domain units are configured by the network device, or predefined by the communication protocol.

The input-CSI-NW and the output-CSI-UE each refer to at least one feature representation $v$ contained in a matrix $V$ obtained after performing the singular value decomposition (SVD) on a channel matrix corresponding to downlink channel information. The SVD is used to perform the eigen-decomposition on the channel matrix. For the input-CSI-NW, the channel matrix is first channel information, e.g., uplink channel information or downlink channel information. For the output-CSI-UE, the channel matrix is the model output value output-CSI-UE, e.g., the recovered uplink channel information or the recovered downlink channel information.

Therefore, the input-CSI-NW is expressed as $d \in C^{2N3dim(v) \times 1}$, and the output-CSI-UE is expressed as $e \in C^{2N3dim(v) \times 1}$, where $dim(v)$ represents a vector dimension of the feature representation $v$. Let $e_i$ denote a feature representation corresponding to an $i^{th}$ subband in the CSI recovery model.

In addition, the network device also configures codebook parameters (such as codebook parameters corresponding to eType II) for the terminal.

The network device estimates downlink channel information of different subbands and calculates a feature representation corresponding to each subband based on the received channel status information-reference signal (CSI-RS). Let $v_i$ represent a feature representation corresponding to an $i^{th}$ subband, i.e., the estimated channel information.

Different deployment situations of the first model and the second model in the terminal and the network device according to the above conditions are described below in detail.

**In the first type, the first model and the second model are deployed in the terminal, and the second model is deployed in the network device.**

In these embodiments, step 301 is described in detail.

In some embodiments, the inferred value is inferred by the second model in the terminal.

In an illustrative manner, the first model is a CSI compression model, and the second model is a CSI recovery model.

In these embodiments, the inferred value is implemented as a model output value output-CSI-UE of the CSI model.

In some embodiments, the first input value is an output value of the first model for the input sample, and the input sample is an input of the first model. When the first model is implemented as a CSI compression model, the first input value is implemented as a binary bit stream, and the input sample is input-CSI-NW.

In these embodiments, the method for monitoring the performance of the AI model includes the following steps.

In the first step, the terminal calculates first data.

For the $i^{th}$ subband channel, the terminal inputs the input sample input-CSI-NW into the CSI compression model, and outputs a binary bit stream as the first input value corresponding to the CSI recovery model. The CSI recovery model performs the inference on the input first input value to obtain the inferred value output-CSI-UE.

The terminal calculates the square generalized cosine similarity (SGCS) $K_{1,i}$ based on the feature representation $e_i$ corresponding to the $i^{th}$ subband and the estimated channel information $v_i$ corresponding to the $i^{th}$ subband. For details, reference may be to formula 1.

$$\text{Formula 1:} \quad K_{1,i} = E\left\{ \frac{1}{N_s} \Sigma_{i=1}^{N_s} \left( \frac{\|e_i^H \cdot v_i\|}{\|e_i\| \|v_i\|} \right)^2 \right\}$$

where $E$ represents calculating the expected value or average in the bracket, and $H$ represents a conjugate transposition.

After the square generalized cosine similarity (SGCS) $K_{1,i}$ is obtained, the first data is obtained according to the following formula 2.

$$\text{Formula 2:} \quad K_1 = \frac{1}{N_s} \Sigma_{i=1}^{N_s} K_{1,i}$$

where $K_1$ is the first data.

It is worth noting that in the above method, the first data may be calculated based on the inferred value output-CSI-UE and the estimated channel information, and may also be directly calculated based on the inferred value output-CSI-UE.

Optionally, the first data $K_1$ is implemented as an intermediate KPI corresponding to at least two frequency domain units, or is implemented as an average value of the intermediate KPIs corresponding to at least two frequency domain units.

When $K_1$ is implemented as the average value of the intermediate KPIs corresponding to the at least two frequency domain units, the terminal calculates the average value based on $K_1$ in the at least two frequency domain units to obtain $K_1$' as third data. Data $N$ of the at least two frequency domain units are configured by the network device, or predefined by the communication protocol.

In the second step, the terminal calculates second data.

For the $i^{th}$ subband channel, the terminal calculates the second input value according to the estimated channel information and the eType II codebook parameters configured by the network device by the following formula 3.

$$\text{Formula 3:} \quad W = W_1 \tilde{W} W_f^{H}$$

where $W$ represents the second input value. In these embodiments, the second data is implemented as precoding matrix indication (PMI) information $W_i$.

Then, the terminal calculates the SCGS $K_{2,i}$ corresponding to $W_i$ and $v_i$ according to the above formula 1, and calculates the second data $K_2$ corresponding to $K_{2,i}$ according to the above formula 2.

It is worth noting that the second data may be calculated based on the estimated channel information and the codebook parameters, may also be directly obtained based on the codebook parameters, or may also be directly obtained based on the estimated channel information.

Optionally, the second data $K_2$ is implemented as an intermediate KPI corresponding to at least two frequency domain units, or is implemented as an average value of the intermediate KPIs corresponding to at least two frequency domain units.

When $K_2$ is implemented as the average value of the intermediate KPIs corresponding to the at least two frequency domain units, the terminal calculates the average value based on $K_2$ in the at least two frequency domain units to obtain $K_2$' as fourth data. Data $N$ of the at least two frequency domain units are configured by the network device, or predefined by the communication protocol.

Optionally, the frequency domain units selected for the third data and the frequency domain units selected for the fourth data are the same as or different from each other.

In the third step, the terminal reports the performance monitoring value/relevant information for calculating the performance monitoring value/performance monitoring indication information to the network device.

In a feasible situation, the terminal first calculates the difference between $K_1$ and $K_2$, and reports it to the network device as the performance monitoring value; or the terminal first calculates the ratio of $K_1$ to $K_2$, and reports it to the network device as the performance monitoring value.

In another feasible situation, the terminal directly reports $K_1$ and $K_2$ to the network device.

In another feasible situation, the terminal reports the relevant value for the first data $K_1$ to the network device, including at least one of the estimated channel information, the inferred value output-CSI-UE, or the binary bit stream.

In another feasible situation, the terminal reports the relevant value for the second data $K_2$ to the network device, including at least one of the input-CSI-NW, the estimated channel information, or the PMI information.

In another feasible situation, the terminal reports the performance monitoring indication information to the network device.

In the fourth step, the network device monitors the performance of the AI model based on the performance monitoring value/relevant information for calculating the performance monitoring value.

Optionally, the network device directly monitors the performance of the AI model after receiving the performance monitoring value sent by the terminal.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

**In the second type, the first model is deployed in the terminal, and the second model is deployed in the network device.**

In the case where the second model is not deployed in the terminal, the following two cases are also included.

**2-1. The network device sends the inferred value to the terminal.**

In an illustrative manner, reference is made to FIG. 5, which shows a flow chart of a method for monitoring a performance of an AI model provided in an illustrative embodiment of the present disclosure. As shown in FIG. 5, the method includes the following steps.

At step 501, an inferred value sent by a network device is received.

The inferred value is inferred by the second model in the network device.

Optionally, when the first model is not deployed in the network device, the terminal inputs the input sample into the deployed first model, outputs a binary bit stream as the first input value, and sends the first input value to the network device. The network device performs the inference on the first input value via the second model to obtain an inferred value output-CSI-UE corresponding to the first input value, and sends the inferred value to the terminal.

Optionally, when the first model is deployed in the network device, the network device inputs the input sample into the deployed first model, outputs a binary bit stream as the first input value, inputs the first input value into the second model, performs the inference on the first input value to obtain an inferred value output-CSI-UE corresponding to the first input value, and sends the inferred value to the terminal.

At step 502, relevant information for calculating the performance monitoring value of the second model is report to the network device.

In an illustrative manner, after receiving the inferred value, the terminal implements the method for monitoring the performance of the AI model according to the following steps.

In the first step, the terminal calculates first data.

The terminal calculates the square generalized cosine similarity (SGCS) $K_{3,i}$ based on the feature representation corresponding to the $i^{th}$ subband and the estimated channel information corresponding to the $i^{th}$ subband according to the above formula 1. After the $K_{3,i}$ is obtained, the first data $K_3$ is obtained according to the above formula 2.

It is worth noting that in the above method, the first data may be calculated based on the inferred value output-CSI-UE and the estimated channel information, and may also be directly calculated based on the inferred value output-CSI-UE.

Optionally, the first data $K_3$ is implemented as an intermediate KPI corresponding to at least two frequency domain units, or is implemented as an average value of the intermediate KPIs corresponding to at least two frequency domain units.

When $K_3$ is implemented as the average value of the intermediate KPIs corresponding to the at least two frequency domain units, the terminal calculates the average value based on $K_3$ in the at least two frequency domain units to obtain $K_3$' as third data. Data $N$ of the at least two frequency domain units are configured by the network device, or predefined by the communication protocol.

In the second step, the terminal calculates second data.

For the $i^{th}$ subband channel, the terminal calculates the second input value according to the estimated channel information and the eType II codebook parameters configured by the network device by the above formula 3.

Then, the terminal calculates the SCGS $K_{2,i}$ corresponding to the codebook parameters and the estimated channel information according to the above formula 1, and calculates the second data $K_2$ corresponding to $K_{2,i}$ according to the above formula 2.

It is worth noting that the second data may be calculated based on the estimated channel information and the codebook parameters, may also be directly obtained based on the codebook parameters, or may also be directly obtained based on the estimated channel information.

Optionally, the second data $K_2$ is implemented as an intermediate KPI corresponding to at least two frequency domain units, or is implemented as an average value of the intermediate KPIs corresponding to at least two frequency domain units.

When $K_2$ is implemented as the average value of the intermediate KPIs corresponding to the at least two frequency domain units, the terminal calculates the average value based on $K_2$ in the at least two frequency domain units to obtain $K_2$' as fourth data. Data $N$ of the at least two frequency domain units are configured by the network device, or predefined by the communication protocol.

Optionally, the frequency domain units selected for the third data and the frequency domain units selected for the fourth data are the same as or different from each other.

In the third step, the terminal reports relevant information for calculating the performance monitoring value to the network device.

In a feasible situation, the terminal directly reports $K_2$ and $K_3$ to the network device.

In another feasible situation, the terminal reports the relevant value for the first data $K_3$ to the network device, including at least one of the estimated channel information, the input-CSI-NW, the inferred value output-CSI-UE, or the binary bit stream.

In another feasible situation, the terminal reports the relevant value for the second data $K_2$ to the network device, including at least one of the input-CSI-NW, the estimated channel information, or the PMI information.

In another feasible situation, the terminal reports the third data $K_1$' to the network device.

In another feasible situation, the terminal reports the fourth data $K_2$' to the network device.

In the fourth step, the network device monitors the performance of the AI model based on the relevant information for calculating the performance monitoring value.

In some embodiments, after receiving the relevant information for calculating the performance monitoring value sent by the terminal, the network device calculates the performance monitoring value of the second model based on the relevant information, and monitors the performance of the AI model based on the performance monitoring value.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

**2-2. The terminal sends the input sample to the network device.**

Optionally, when the first model is not deployed in the network device, the terminal sends the input sample input-CSI-NW and the first input value (binary bit stream) to the network device.

Optionally, when the first model is deployed in the network device, the terminal sends the input sample input-CSI-NW to the network device.

In an illustrative manner, the method for monitoring the performance of the AI model is implemented according to the following steps.

In the first step, the input sample is sent to the network device.

Optionally, the terminal simultaneously sends the input sample input-CSI-NW and the second data $K_2$ or the fourth data $K_2$' calculated in the above steps to the network device.

Optionally, the terminal simultaneously sends the input sample input-CSI-NW and the second input value (PMI information) to the network device. In this case, the network device calculates the second data $K_2$ according to the PMI information and the input sample input-CSI-NW by the above formula 2, or calculates the fourth data $K_2$' according to the second data in the at least two frequency domain units.

In the second step, the network device calculates first data.

The network device calculates the first data $K_4$ according to the received input sample input-CSI-NW and the inferred value output-CSI-UE corresponding to the second model deployed in the network device by the above formula 1, or obtains the third data $K_4$' according to the average value of the first data in the at least two frequency domain units after calculating the first data $K_4$. Data $N$ of the at least two frequency domain units are configured by the network device, or predefined by the communication protocol.

In the third step, the network device monitors the performance of the AI model based on the relevant information for calculating the performance monitoring value.

In some embodiments, after receiving the relevant information for calculating the performance monitoring value sent by the terminal, the network device calculates the performance monitoring value of the second model based on the relevant information, and monitors the performance of the AI model based on the performance monitoring value. The performance monitoring value includes the ratio or difference between the first data and the second data.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

It is worth noting that in the embodiments of the present disclosure, $K_1$, $K_2$, $K_3$, $K_4$, $K_1'$, $K_2'$, $K_3'$ and $K_4'$ are used to represent the first/second/third/fourth data calculated under different circumstances.

In some embodiments, when reporting indication information sent by the network device is received, the relevant information for calculating the performance monitoring value is reported; or when a target event is triggered, the relevant information for calculating the performance monitoring value is reported.

The target event is determined according to the data distribution corresponding to the input data of the first model; or the target event is determined according to the data distribution corresponding to the output data of the first model.

In these embodiments, when the second model is only deployed in the network device, the relevant information for calculating the performance monitoring value of the second model needs to be reported to the network device when the reporting indication information sent by the network device is received or the target event is triggered in the terminal.

In an illustrative manner, the reporting indication information sent by the network device is used to instruct the terminal to report the relevant information for calculating the performance monitoring value of the second model within a specified time range.

In an illustrative manner, the data distribution of the input data of the first model is used to indicate the correlation between multiple input data. The correlation between the multiple input data is determined by calculating the cosine similarity between the multiple input data. When the correlation between the multiple input data is higher, it indicates that the difference between the input data is smaller.

Optionally, a third threshold is set. When the data distribution of the input data of the first model reaches the third threshold, the performance monitoring value of the second model is reported, or the relevant information for calculating the performance monitoring value of the second model is reported.

In an illustrative manner, the data distribution of the output data of the first model is used to indicate the correlation between multiple output data. The correlation between the multiple output data is determined by calculating the cosine similarity between the multiple output data. When the correlation between the multiple output data is higher, it indicates that the difference between the output data is smaller.

Optionally, a fourth threshold is set. When the data distribution of the output data of the first model reaches the fourth threshold, the performance monitoring value of the second model is reported, or the relevant information for calculating the performance monitoring value of the second model is reported.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

Embodiments of the present disclosure further provide a method in which a network device receives a performance monitoring value of a second model from a terminal or receives relevant information for calculating a performance monitoring value of a second model or receives performance monitoring indication information, thereby calculating the performance monitoring value of the second model based on the relevant information.

Reference is made to FIG. 6, which shows a flow chart of a method for monitoring a performance of an AI model provided in an illustrative embodiment of the present disclosure. This embodiment is described by taking the method applied to the network device in the communication system shown in FIG. 2 as an example. The method may include the following step.

At step 601, a performance monitoring value of a second model reported by a terminal is received.

In an illustrative manner, the AI model includes a first model and the second model, the terminal is deployed with the first model and the second model, and the network device is deployed with the second model.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

In an illustrative manner, the performance monitoring value is used to indicate the quality of the model performance of the AI model.

Optionally, the performance monitoring value is used to perform the performance monitoring on the first model, or used to perform the performance monitoring on the second model, or used to perform the performance monitoring on both the first model and the second model.

In some embodiments, the performance monitoring value is determined based on first data and second data, or the performance monitoring value is determined based on third data and fourth data.

The first data is determined based on an inferred value of a first input value by the second model. The second data is determined based on an output value corresponding to a second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

Optionally, the performance monitoring value includes at least one of the following monitoring value types: 1) the difference between the first data and the second data; 2) the ratio of the first data to the second data; 3) the difference between the third data and the fourth data; 4) the ratio of the third data to the fourth data; 5) a weighted average of the first data and the second data; 6) the average value of the first data and the second data; 7) a weighted average of the third data and the fourth data; or 8) the average value of the third data and the fourth data.

At step 601, relevant information for calculating the performance monitoring value is received.

Optionally, the relevant information for calculating the performance monitoring value includes at least one of the following information: 1) the first data; 2) the second data; 3) the third data; 4) the fourth data; 5) a relevant value for calculating the first data, where the relevant value for calculating the first data includes at least one of the input sample or the first input value; or 6) a relevant value for calculating the second data, where the relevant value for calculating the second data includes at least one of the input sample or the second input value.

In an illustrative manner, the performance monitoring indication information indicates the quality of current performance parameters of the first model and/or the second model.

In one example, bit information is used as the performance monitoring indication information. When the value of the bit information is 1, it means that the performance parameters of the first model and/or the second model are better; and when the value of the bit information is 0, it means that the performance parameters of the first model and/or the second model are worse. Alternatively, when the value of the bit information is 0, it means that the performance parameters of the first model are better; and when the value of the bit information is 1, it means that the performance parameters of the second model are worse.

At step 603, the performance monitoring value of the second model is calculated based on the relevant information.

Optionally, calculating the performance monitoring value of the second model includes at least one of the calculation methods as follows:

- calculating the first data based on the relevant value for calculating the first data;

- calculating the second data based on the relevant value for calculating the second data;
- calculating the third data based on the average value, the maximum value or the minimum value of the first data corresponding to the at least two frequency domain units;
- calculating the fourth data based on the average value, the maximum value or the minimum value of the second data corresponding to the at least two frequency domain units;
- calculating the ratio of the first data to the second data;
- calculating the difference between the first data and the second data;
- calculating the difference between the third data and the fourth data; or
- calculating the ratio of the third data to the fourth data.

At step 604, performance monitoring indication information is received.

In an illustrative manner, the performance monitoring indication information indicates the quality of current performance parameters of the first model and/or the second model.

In one example, bit information is used as the performance monitoring indication information. When the value of the bit information is 1, it means that the performance parameters of the first model and/or the second model are better; and when the value of the bit information is 0, it means that the performance parameters of the first model and/or the second model are worse. Alternatively, when the value of the bit information is 0, it means that the performance parameters of the first model are better; and when the value of the bit information is 1, it means that the performance parameters of the second model are worse. In a feasible situation, the terminal reports the performance monitoring value of the second model to the network device. The network device directly determines the model performance of the second model in the current frequency domain unit based on the performance monitoring value, and performs a management operation on the AI model.

In some embodiments, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

In some embodiments, the terminal reports the performance monitoring value of the second model to the network device, and the network device determines the model performance of the first model and/or the second model in the current frequency domain unit based on the performance monitoring value, and performs a management operation on the AI model.

In some embodiments, the terminal reports performance monitoring indication information to the network device, and the network device determines the model performance of the first model and/or the second model in the current frequency domain unit based on the performance monitoring indication information, and performs a management operation on the AI model.

In some embodiments, a management operation on the AI model is performed based on the performance monitoring value of the second model. The management operation on the AI model includes: a switching operation on the AI model, an activation operation on the AI model, a deactivation operation on the AI model, and falling back to a traditional communication operation without using the AI model.

The management operation on the AI model includes at least one of types of operations as follows:

- a switching operation on the AI model;
- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

Reference is made to FIG. 7, which shows a flow chart of a method for monitoring a performance of an AI model provided in an illustrative embodiment of the present disclosure. This embodiment is described by taking the method applied to the network device in the communication system shown in FIG. 2 as an example. The method may include the following step.

At step 701, relevant information for calculating a performance monitoring value of a second model reported by a terminal is received.

In an illustrative manner, the AI model includes a first model and the second model, the terminal is deployed with the first model, and the network device is deployed with the second model.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

In an illustrative manner, the relevant information for calculating the performance monitoring value of the second model is used to calculate the performance monitoring value of the second model.

Optionally, the relevant information for calculating the performance monitoring value includes at least one of the following information: 1) first data; 2) second data; 3) third data; 4) fourth data; 5) a relevant value for calculating first data, where the relevant value for calculating the first data includes at least one of an input sample or a first input value; or 6) a relevant value for calculating second data, where the relevant value for calculating the second data includes at least one of an input sample or a second input value.

The first data is determined based on an inferred value of the first input value by the second model. The second data is determined based on an output value corresponding to the second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

At step 702, the performance monitoring value of the second model is calculated based on the relevant information.

In another feasible situation, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

The management operation on the AI model includes at least one of types of operations as follows:

- a switching operation on the AI model;
- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In a feasible situation, the terminal reports a relevant value for calculating the performance monitoring value of the second model to the network device. The network device first calculates the performance monitoring value of the second model based on the relevant value for calculating the performance monitoring value, and then performs the above-mentioned management operation on the AI model according to the performance monitoring value.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

In an optional embodiment, each frequency domain unit is implemented as a subband, the number of subbands configured by the network device is $N_3$, and the number of data transmission layers is 1, or other values. When the CSI compression model and the CSI recovery model are deployed in the terminal at the same time, the input sample of the CSI compression model is input-CSI-NW, and the model output value of the CSI recovery model is an inferred value output-CSI-UE. That is, data N of at least two frequency domain units are configured by the network device, or predefined by the communication protocol.

The input-CSI-NW and the output-CSI-UE each refer to at least one feature representation $v$ contained in a matrix $V$ obtained after performing the singular value decomposition (SVD) on a channel matrix corresponding to downlink channel information. The SVD is used to perform the eigen-decomposition on the channel matrix. For the input-CSI-NW, the channel matrix is first channel information, e.g., uplink channel information or downlink channel information. For the output-CSI-UE, the channel matrix is the model output value output-CSI-UE, e.g., the recovered uplink channel information or the recovered downlink channel information.

Therefore, the input-CSI-NW is expressed as $d \in C^{2N_3 dim(v) \times 1}$, and the output-CSI-UE is expressed as $e \in C^{2N_3 dim(v) \times 1}$, where $dim(v)$ represents a vector dimension of the feature representation $v$. Let $e_i$ denote a feature representation corresponding to an $i^{th}$ subband in the CSI recovery model.

In addition, the network device also configures codebook parameters (such as codebook parameters corresponding to eType II) for the terminal.

The network device estimates downlink channel information of different subbands and calculates a feature representation corresponding to each subband based on the received CSI-RS. Let $v_i$ represent a feature representation corresponding to an $i^{th}$ subband, i.e., the estimated channel information.

Different deployment situations of the first model and the second model in the terminal and the network device according to the above conditions are described below in detail.

**In the first type, the first model and the second model are deployed in the terminal, and the second model is deployed in the network device.**

In some embodiments, the inferred value is inferred by the second model in the terminal.

In an illustrative manner, the first model is a CSI compression model, and the second model is a CSI recovery model.

In these embodiments, the inferred value is implemented as a model output value output-CSI-UE of the CSI model.

In some embodiments, the first input value is an output value of the first model for the input sample. When the first model is implemented as a CSI compression model, the first input value is implemented as a binary bit stream.

In these embodiments, the method for monitoring the performance of the AI model includes the following steps.

In the first step, the terminal calculates first data.

For the $i^{th}$ subband channel, the terminal inputs the input sample input-CSI-NW into the CSI compression model, and outputs a binary bit stream as the first input value corresponding to the CSI recovery model. The CSI recovery model performs the inference on the input first input value to obtain the inferred value output-CSI-UE.

The terminal calculates the square generalized cosine similarity (SGCS) $K_{1,i}$ based on the feature representation $e_i$ corresponding to the $i^{th}$ subband and the estimated channel information $v_i$ corresponding to the $i^{th}$ subband by the formula 1.

After the square generalized cosine similarity (SGCS) $K_{1,i}$ is obtained, the first data is obtained according to the above formula 2.

It is worth noting that in the above method, the first data may be calculated based on the inferred value output-CSI-UE and the estimated channel information, and may also be directly calculated based on the inferred value output-CSI-UE.

Optionally, the first data $K_1$ is implemented as an intermediate KPI corresponding to at least two frequency domain units, or is implemented as an average value of the intermediate KPIs corresponding to at least two frequency domain units.

When $K_1$ is implemented as the average value of the intermediate KPIs corresponding to the at least two frequency domain units, the terminal calculates the average value based on $K_1$ in the at least two frequency domain units to obtain $K_1$' as third data.

Data $N$ of the at least two frequency domain units are configured by the network device, or predefined by the communication protocol.

<u>In the second step, the terminal calculates second data.</u>

For the $i^{\text{th}}$ subband channel, the terminal calculates the second input value according to the estimated channel information and the eType II codebook parameters configured by the network device by the above formula 3. In these embodiments, the second data is implemented as precoding matrix indication (PMI) information $W_i$.

Then, the terminal calculates the SCGS $K_{2,i}$ corresponding to $W_i$ and $v_i$ according to the above formula 1, and calculates the second data $K_2$ corresponding to $K_{2,i}$ according to the above formula 2.

It is worth noting that the second data may be calculated based on the estimated channel information and the codebook parameters, may also be directly obtained based on the codebook parameters, or may also be directly obtained based on the estimated channel information.

Optionally, the second data $K_2$ is implemented as an intermediate KPI corresponding to at least two frequency domain units, or is implemented as an average value of the intermediate KPIs corresponding to at least two frequency domain units.

When $K_2$ is implemented as the average value of the intermediate KPIs corresponding to the at least two frequency domain units, the terminal calculates the average value based on $K_2$ in the at least two frequency domain units to obtain $K_2$' as fourth data. Data $N$ of the at least two frequency domain units are configured by the network device, or predefined by the communication protocol.

Optionally, the frequency domain units selected for the third data and the frequency domain units selected for the fourth data are the same as or different from each other.

<u>In the third step, the terminal reports the performance monitoring value/relevant information for calculating the performance monitoring value to the network device.</u>

In a feasible situation, the terminal first calculates the difference between $K_1$ and $K_2$, and reports it to the network device as the performance monitoring value; or the terminal first calculates the ratio of $K_1$ to $K_2$, and reports it to the network device as the performance monitoring value.

In another feasible situation, the terminal directly reports $K_1$ and $K_2$ to the network device.

In another feasible situation, the terminal reports the relevant value for the first data $K_1$ to the network device, including at least one of the estimated channel information, the inferred value output-CSI-UE, or the binary bit stream.

In another feasible situation, the terminal reports the relevant value for the second data $K_2$ to the network device, including at least one of the input-CSI-NW, the estimated channel information, or the PMI information.

<u>In the fourth step, the network device monitors the performance of the AI model based on the performance monitoring value/relevant information for calculating the performance monitoring value.</u>

Optionally, the network device directly monitors the performance of the AI model after receiving the performance monitoring value sent by the terminal.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

**In the second type, the first model is deployed in the terminal, and** the **second model is deployed in the**

**network device.**

In the case where the second model is not deployed in the terminal, the following two cases are also included.

**2-1. The network device sends the inferred value to the terminal.**

The inferred value is inferred by the second model in the network device.

Optionally, when the first model is not deployed in the network device, the terminal inputs the input sample into the deployed first model, outputs a binary bit stream as the first input value, and sends the first input value to the network device. The network device performs the inference on the first input value via the second model to obtain an inferred value output-CSI-UE corresponding to the first input value, and sends the inferred value to the terminal.

Optionally, when the first model is deployed in the network device, the network device inputs the input sample into the deployed first model, outputs a binary bit stream as the first input value, inputs the first input value into the second model, performs the inference on the first input value to obtain an inferred value output-CSI-UE corresponding to the first input value, and sends the inferred value to the terminal.

In an illustrative manner, after receiving the inferred value, the terminal implements the method for monitoring the performance of the AI model according to the following steps.

In the first step, the terminal calculates first data.

The terminal calculates the square generalized cosine similarity (SGCS) $K_{3,i}$ based on the feature representation corresponding to the $i^{th}$ subband and the estimated channel information corresponding to the $i^{th}$ subband according to the above formula 1. After the $K_{3,i}$ is obtained, the first data $K_3$ is obtained according to the above formula 2.

It is worth noting that in the above method, the first data may be calculated based on the inferred value output-CSI-UE and the estimated channel information, and may also be directly calculated based on the inferred value output-CSI-UE.

Optionally, the first data $K_3$ is implemented as an intermediate KPI corresponding to at least two frequency domain units, or is implemented as an average value of the intermediate KPIs corresponding to at least two frequency domain units.

When $K_3$ is implemented as the average value of the intermediate KPIs corresponding to the at least two frequency domain units, the terminal calculates the average value based on $K_3$ in the at least two frequency domain units to obtain $K_3$' as third data. Data N of the at least two frequency domain units are configured by the network device, or predefined by the communication protocol.

In the second step, the terminal calculates second data.

For the $i^{th}$ subband channel, the terminal calculates the second input value according to the estimated channel information and the eType II codebook parameters configured by the network device by the above formula 3.

Then, the terminal calculates the SCGS $K_{2,i}$ corresponding to the codebook parameters and the estimated channel information according to the above formula 1, and calculates the second data $K_2$ corresponding to $K_{2,i}$ according to the above formula 2.

It is worth noting that the second data may be calculated based on the estimated channel information and the codebook parameters, may also be directly obtained based on the codebook parameters, or may also be directly obtained based on the estimated channel information.

Optionally, the second data $K_2$ is implemented as an intermediate KPI corresponding to at least two frequency domain units, or is implemented as an average value of the intermediate KPIs corresponding to at least two frequency domain units.

When $K_2$ is implemented as the average value of the intermediate KPIs corresponding to the at least two frequency domain units, the terminal calculates the average value based on $K_2$ in the at least two frequency domain units to obtain $K_2$' as fourth data. Data $N$ of the at least two frequency domain units are configured by the network device, or predefined by the communication protocol.

Optionally, the frequency domain units selected for the third data and the frequency domain units selected for the fourth data are the same as or different from each other.

In the third step, the terminal reports relevant information for calculating the performance monitoring value to the network device.

In another feasible situation, the terminal directly reports $K_2$ and $K_3$ to the network device.

In another feasible situation, the terminal reports the relevant value for the first data $K_3$ to the network device, including at least one of the estimated channel information, the input-CSI-NW, the inferred value output-CSI-UE, or the binary bit stream.

In another feasible situation, the terminal reports the relevant value for the second data $K_2$ to the network device, including at least one of the input-CSI-NW, the estimated channel information, or the PMI information.

In the fourth step, the network device monitors the performance of the AI model based on the performance monitoring value/the relevant information for calculating the performance monitoring value.

Optionally, after receiving the relevant information for calculating the performance monitoring value sent by the terminal, the network device calculates the performance monitoring value of the second model based on the relevant information, and monitors the performance of the AI model based on the performance monitoring value.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In some embodiments, the network device monitors the performance of the AI model after calculating the performance monitoring value of the second model based on the relevant information, where the calculation procedure includes at least one of the steps as follows:

- calculating the first data based on the relevant value for calculating the first data;
- calculating the second data based on the relevant value for calculating the second data;
- calculating the third data based on the average value, the maximum value or the minimum value of the first data corresponding to the at least two frequency domain units;
- calculating the fourth data based on the average value, the maximum value or the minimum value of the second data corresponding to the at least two frequency domain units;
- calculating the performance monitoring value based on the first data and the second data, for example, calculating the ratio of the first data to the second data, or calculating the difference between the first data and the second data; or
- calculating the performance monitoring value based on the third data and the fourth data, for example, calculating the difference between the third data and the fourth data, or calculating the ratio of the third data to the fourth data.

### 2-2. The input sample sent by the terminal is received.

Optionally, when the first model is not deployed in the network device, the terminal sends the input sample input-CSI-NW and the first input value (binary bit stream) to the network device.

Optionally, when the first model is deployed in the network device, the terminal sends the input sample input-CSI-NW to the network device.

In an illustrative manner, the method for monitoring the performance of the AI model is implemented according to the following steps.

In the first step, the network device receives the input sample.

Optionally, the terminal simultaneously sends the input sample input-CSI-NW and the second data $K_2$ or the fourth data $K_2$' calculated in the above steps to the network device.

Optionally, the terminal simultaneously sends the input sample input-CSI-NW and the second input value (PMI information) to the network device. In this case, the network device calculates the second data $K_2$ according to the PMI information and the input sample input-CSI-NW by the above formula 2, or calculates the fourth data $K_2$' according to the second data in the at least two frequency domain units.

In the second step, the network device calculates first data.

The network device calculates the first data $K_4$ according to the received input sample input-CSI-NW and the inferred value output-CSI-UE corresponding to the second model deployed in the network device by the above formula 1, or obtains the third data $K_4$' according to the average value of the first data in the at least two frequency domain units after calculating the first data $K_4$. Data $N$ of the at least two frequency domain units are configured by the network device, or predefined by the communication protocol.

In the third step, the network device monitors the performance of the AI model based on the performance monitoring value/the relevant information for calculating the performance monitoring value.

Optionally, the network device monitors the performance of the AI model based on the performance monitoring value. The performance monitoring value includes at least one of: the difference between the first data and the second data, the ratio of the first data to the second data, the difference between the third data and the fourth data, or the ratio of the third data to the fourth data.

In some embodiments, a management operation on the AI model is performed based on the performance monitoring value of the second model. The management operation on the AI model includes a switching operation on the AI model, an activation operation on the AI model, a deactivation operation on the AI model, and falling back to a traditional communication operation without using the AI model.

In these embodiments, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In these embodiments, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

It is worth noting that in the embodiments of the present disclosure, $K_1$, $K_2$, $K_3$, $K_4$, $K_1'$, $K_2'$, $K_3'$ and $K_4'$ are used to represent the first/second/third/fourth data calculated under different circumstances.

In some embodiments, reporting indication information is sent to the terminal.

In these embodiment, when the second model is only deployed in the network device, the relevant information for calculating the performance monitoring value of the second model needs to be reported when the reporting indication information sent by the network device is received or a target event is triggered in the terminal.

The target event is determined according to the data distribution corresponding to the input data of the first model; or the target event is determined according to the data distribution corresponding to the output data of the first model.

In an illustrative manner, the reporting indication information sent by the network device is used to instruct the terminal to report the performance monitoring value of the second model or the relevant information for calculating the performance monitoring value within a specified time range.

In an illustrative manner, the data distribution of the input data of the first model is used to indicate the correlation between multiple input data. The correlation between the multiple input data is determined by calculating the cosine similarity between the multiple input data. When the correlation between the multiple input data is higher, it indicates that the difference between the input data is smaller.

Optionally, a third threshold is set. When the data distribution of the input data of the first model reaches the third threshold, the performance monitoring value of the second model is reported, or the relevant information for calculating the performance monitoring value of the second model is reported.

In an illustrative manner, the data distribution of the output data of the first model is used to indicate the correlation between multiple output data. The correlation between the multiple output data is determined by calculating the cosine similarity between the multiple output data. When the correlation between the multiple output data is higher, it indicates that the difference between the output data is smaller.

Optionally, a fourth threshold is set. When the data distribution of the output data of the first model reaches the fourth threshold, the performance monitoring value of the second model is reported, or the relevant information for calculating the performance monitoring value of the second model is reported.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

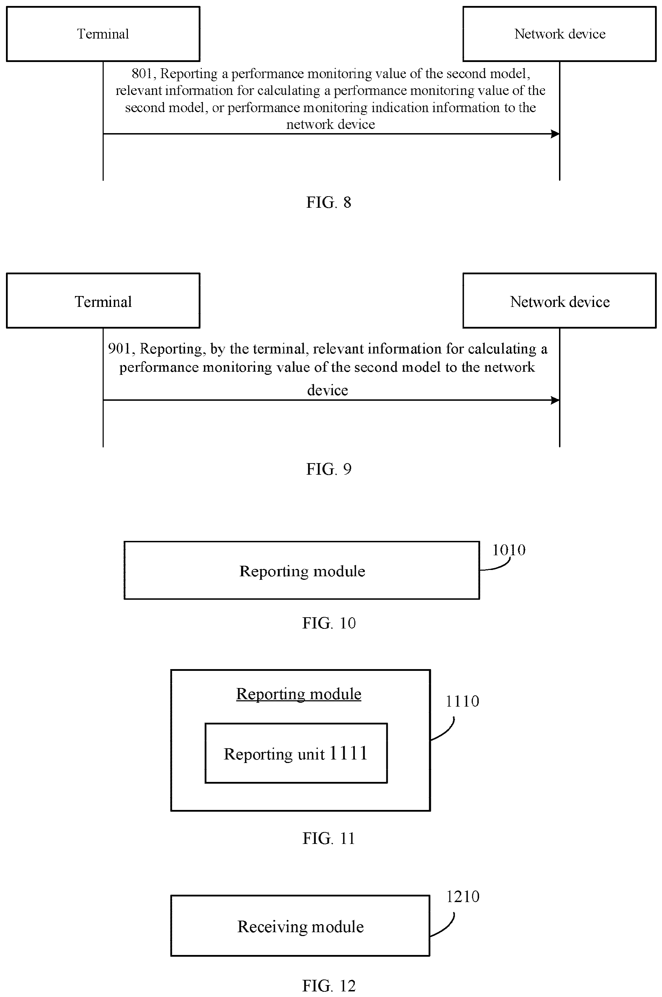

FIG. 8 is a flow chart of an interaction between a terminal and a network device provided in an embodiment of the present disclosure. This embodiment is described by taking an interaction process applied to the terminal and the network device in the communication system shown in FIG. 2 as an example. As shown in FIG. 8, the interaction process includes the following step.

At step 801, the terminal reports a performance monitoring value of a second model, relevant information for calculating a performance monitoring value of a second model, or performance monitoring indication information to the network device.

In an illustrative manner, the AI model includes a first model and the second model, the first model and the second model are deployed in the terminal, and the second model is deployed in the network device.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

**EP 4 668 597 A1**

In an illustrative manner, the performance monitoring value is used to indicate the quality of the model performance of the AI model.

Optionally, the performance monitoring value is used to perform the performance monitoring on the first model, or used to perform the performance monitoring on the second model, or used to perform the performance monitoring on both the first model and the second model.

In some embodiments, the performance monitoring value is determined based on first data and second data, or the performance monitoring value is determined based on third data and fourth data.

The first data is determined based on an inferred value of a first input value by the second model. The second data is determined based on an output value corresponding to a second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

Optionally, the performance monitoring value includes at least one of the following monitoring value types: 1) the difference between the first data and the second data; 2) the ratio of the first data to the second data; 3) the difference between the third data and the fourth data; 4) the ratio of the third data to the fourth data; 5) a weighted average of the first data and the second data; 6) the average value of the first data and the second data; 7) a weighted average of the third data and the fourth data; or 8) the average value of the third data and the fourth data.

Optionally, the relevant information for calculating the performance monitoring value includes at least one of the following information: 1) the first data; 2) the second data; 3) the third data; 4) the fourth data; 5) a relevant value for calculating the first data, where the relevant value for calculating the first data includes at least one of the input sample or the first input value; or 6) a relevant value for calculating the second data, where the relevant value for calculating the second data includes at least one of the input sample or the second input value.

In an illustrative manner, the performance monitoring indication information indicates the quality of current performance parameters of the first model and/or the second model.

In one example, bit information is used as the performance monitoring indication information. When the value of the bit information is 1, it means that the performance parameters of the first model and/or the second model are better; and when the value of the bit information is 0, it means that the performance parameters of the first model and/or the second model are worse. Alternatively, when the value of the bit information is 0, it means that the performance parameters of the first model are better; and when the value of the bit information is 1, it means that the performance parameters of the second model are worse.

In a feasible situation, the terminal reports the performance monitoring value of the second model to the network device. The network device directly determines the model performance of the second model in the current frequency domain unit based on the performance monitoring value, and performs a management operation on the AI model.

In another feasible situation, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

In another feasible situation, the terminal reports performance monitoring indication information to the network device, and the network device determines the model performance of the first model and/or the second model in the current frequency domain unit based on the performance monitoring indication information, and performs a management operation on the AI model.

The management operation on the AI model includes at least one of types of operations as follows:

- a switching operation on the AI model;

24

- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

FIG. 9 is a flow chart of an interaction between a terminal and a network device provided in an embodiment of the present disclosure. This embodiment is described by taking an interaction process applied to the terminal and the network device in the communication system shown in FIG. 2 as an example. As shown in FIG. 9, the interaction process includes the following step.

At step 901, the terminal reports relevant information for calculating a performance monitoring value of a second model the network device.

In an illustrative manner, the AI model includes a first model and the second model, the first model is deployed in the terminal, and the second model is deployed in the network device.

In some embodiments, the first model and the second model constitute a bilateral model. The first model is used to process an input sample and output an intermediate value, and the intermediate value is input into the second model and processed by the second model to output an inferred value. The inferred value is as identical or similar to the input sample as possible. The input sample is data or information related to the mobile communication system, such as channel information.

In an illustrative manner, the relevant information for calculating the performance monitoring value of the second model is used to calculate the performance monitoring value of the second model.

Optionally, the relevant information for calculating the performance monitoring value includes at least one of the following information: 1) first data; 2) second data; 3) third data; 4) fourth data; 5) a relevant value for calculating first data, where the relevant value for calculating the first data includes at least one of an input sample or a first input value; or 6) a relevant value for calculating second data, where the relevant value for calculating the second data includes at least one of an input sample or a second input value.

The first data is determined based on an inferred value of the first input value by the second model. The second data is determined based on an output value corresponding to the second input value in a case where the second model is not used. The first input value and the second input value correspond to the same input sample. The input sample is an input of the first model, and the first input value is an output value of the first model for the input sample.

In an illustrative manner, the first input value is implemented as the output result of the first model, that is, the intermediate value. The first input value is input into the second model, and the output result of the second model is the inferred value corresponding to the first input value.

In an illustrative manner, the second input value refers to a result obtained by measuring the input sample using a specified configuration in the case where the second model is not used.

The third data is determined based on an average value, a maximum value, or a minimum value of the first data corresponding to at least two frequency domain units, and the fourth data is determined based on an average value, a maximum value, or a minimum value of the second data corresponding to at least two frequency domain units.

In an illustrative manner, the third data is obtained from an average value, a maximum value, or a minimum value of a plurality of first data obtained within a historical time range corresponding to at least two frequency domain units.

In an illustrative manner, the fourth data is obtained from an average value, a maximum value, or a minimum value of a plurality of second data obtained within a historical time range corresponding to at least two frequency domain units.

In some embodiments, data N of the at least two frequency domain units are configured by the network device, or predefined by a communication protocol.

In another feasible situation, the terminal reports relevant information for calculating the performance monitoring value of the second model to the network device. After calculating the performance monitoring value of the second model based on the relevant information, the network device determines the model performance of the first model and/or the second model in the current frequency domain unit based on the performance monitoring indication information, and performs a management operation on the AI model.

The management operation on the AI model includes at least one of types of operations as follows:

- a switching operation on the AI model;
- an activation operation on the AI model;
- a deactivation operation on the AI model;
- updating model parameters of the AI model; or
- falling back to a traditional communication operation without using the AI model.

In an illustrative manner, the network device presets a first threshold. If the difference/ratio between the first data and the second data or the difference/ratio between the third data and the fourth data reaches the first threshold, the switching operation on the AI model is implemented. If the difference/ratio between the first data and the second data or the difference/ratio between the third data and the fourth data does not reach the first threshold, the AI model is not switched.

In an illustrative manner, the network device presets a second threshold. If the difference/ratio between the first data and the second data or the difference/ratio between the third data and the fourth data is less than the second threshold, at least one of the following operations is implemented: the activation operation on the AI model, the deactivation operation on the AI model, or falling back to the traditional communication operation without using the AI model.

In a feasible situation, the terminal reports a relevant value for calculating the performance monitoring value of the second model to the network device. The network device first calculates the performance monitoring value of the second model based on the relevant value for calculating the performance monitoring value, and then performs the above-mentioned management operation on the AI model according to the performance monitoring value.

In summary, the technical solution provided in these embodiments provides a solution for monitoring the performance of the AI model. In the case where the first model and the second model are deployed in the terminal, the terminal reports the performance monitoring value of the second model in the AI model, the relevant information for calculating the performance monitoring value of the second model, or the performance monitoring indication information, such that the network device or the terminal monitors the performance of the AI model to ensure the model performance of the AI model.

The following are embodiments of the apparatus of the present disclosure, which may be used to execute the embodiments of the method of the present disclosure. For details not disclosed in the embodiments of the apparatus of the present disclosure, reference is made to the embodiments of the method of the present disclosure.

FIG. 10 shows a block diagram of an apparatus for monitoring a performance of an AI model provided in an illustrative embodiment of the present disclosure. The apparatus has the function of implementing the abovementioned method example at the terminal side, and the function may be implemented by hardware or by executing corresponding software by hardware. As shown in FIG. 10, the AI model includes a first model and a second model that are deployed in the apparatus, and the second model is deployed in a network device. The apparatus includes a reporting module 1010 configured to report a performance monitoring value of the second model, relevant information for calculating a performance monitoring value of the second model, or performance monitoring indication information to the network device.

In some embodiments, the performance monitoring value of the second model includes at least one of: the performance monitoring value determined based on first data and second data, where the first data is determined based on an inferred value of a first input value by the second model, the second data is determined based on an output value corresponding to a second input value in a case where the second model is not used, the first input value and the second input value correspond to a same input sample, the input sample is an input of the first model, and the first input value is an output value of the first model for the input sample; or the performance monitoring value determined based on third data and fourth data, where the third data is determined based on an average value, a maximum value or a minimum value of first data corresponding to at least two frequency domain units, and the fourth data is determined based on an average value, a maximum value or a minimum value of second data corresponding to at least two frequency domain units.

In some embodiments, the relevant information for calculating the performance monitoring value includes at least one of: first data determined based on an inferred value of a first input value by the second model, where the first input value is an output value of the first model for an input sample, and the input sample is an input of the first model; second data determined based on an output value corresponding to a second input value in a case where the second model is not used, and the first input value and the second input value correspond to a same input sample; third data determined based on an average value, a maximum value, or a minimum value of first data corresponding to at least two frequency domain units;

fourth data determined based on an average value, a maximum value, or a minimum value of second data corresponding to at least two frequency domain units; a relevant value for calculating first data; or a relevant value for calculating second data.

In some embodiments, the inferred value is inferred by the second model in the terminal.

In some embodiments, the relevant value for calculating the first data includes at least one of: the input sample, or the first input value; and the relevant value for calculating the second data includes at least one of: the input sample, or the second input value.

In some embodiments, the first model is a CSI compression model, and the second model is a CSI recovery model.

In some embodiments, data N of the at least two frequency domain units are configured by the network device, or predefined by a communication protocol.

FIG. 11 shows a block diagram of an apparatus for monitoring a performance of an AI model provided in an illustrative embodiment of the present disclosure. The apparatus has the function of implementing the abovementioned method example at the terminal side, and the function may be implemented by hardware or by executing corresponding software by hardware. As shown in FIG. 11, the AI model includes a first model deployed in the apparatus and a second model deployed in a network device, and the apparatus includes: a reporting module 1110 configured to report relevant information for calculating a performance monitoring value of the second model to the network device.

In some embodiments, the relevant information for calculating the performance monitoring value includes at least one of: first data determined based on an inferred value of a first input value by the second model, where the inferred value is inferred by the second model in the network device, the first input value is an output value of the first model for an input sample, and the input sample is an input of the first model; second data determined based on an output value corresponding to a second input value in a case where the second model is not used, and the first input value and the second input value correspond to a same input sample; third data determined based on an average value, a maximum value, or a minimum value of first data corresponding to at least two frequency domain units; fourth data determined based on an average value, a maximum value, or a minimum value of second data corresponding to at least two frequency domain units; a relevant value for calculating first data; or a relevant value for calculating second data.

In some embodiments, the relevant value for calculating the first data includes at least one of: the input sample, or the first input value; and the relevant value for calculating the second data includes at least one of: the input sample, or the second input value.

In some embodiments, the first model is a CSI compression model, and the second model is a CSI recovery model.

In some embodiments, data N of the at least two frequency domain units are configured by the network device, or predefined by a communication protocol.

In some embodiments, the reporting module 1110 includes a reporting unit 1111 configured to report the relevant information for calculating the performance monitoring value of the second model to the network device in a case where reporting indication information sent by the network device is received; or a reporting unit 1111 further configured to report the relevant information for calculating the performance monitoring value of the second model to the network device in a case where a target event is triggered.

In some embodiments, the target event is determined according to a data distribution corresponding to input data of the first model; or the target event is determined according to a data distribution corresponding to output data of the first model.

FIG. 12 shows a block diagram of an apparatus for monitoring a performance of an AI model provided in an illustrative embodiment of the present disclosure. The apparatus has the function of implementing the abovementioned method example at the network device side, and the function may be implemented by hardware or by executing corresponding software by hardware. As shown in FIG. 12, the AI model includes a first model and a second model that are deployed in a terminal, the second model is deployed in the apparatus, and the apparatus includes: a receiving module 1210 configured to receive a performance monitoring value of the second model reported by the terminal; or a receiving module 1210 further configured to receive relevant information for calculating a performance monitoring value of the second model, and calculate the performance monitoring value of the second model based on the relevant information; or a receiving module 1210 further configured to receive performance monitoring indication information.

In some embodiments, the performance monitoring value of the second model includes at least one of: the performance monitoring value determined based on first data and second data, where the first data is determined based on an inferred value of a first input value by the second model, the second data is determined based on an output value corresponding to a second input value in a case where the second model is not used, the first input value and the second input value correspond to a same input sample, the input sample is an input of the first model, and the first input value is an output value of the first model for the input sample; or the performance monitoring value determined based on third data and fourth data, where the third data is determined based on an average value, a maximum value or a minimum value of first data corresponding to at least two frequency domain units, and the fourth data is determined based on an average value, a maximum value or a minimum value of second data corresponding to at least two frequency domain units.

In some embodiments, the relevant information for calculating the performance monitoring value includes at least one of: first data determined based on an inferred value of a first input value by the second model, where the first input value is an output value of the first model for an input sample, and the input sample is an input of the first model; second data determined based on an output value corresponding to a second input value in a case where the second model is not used, and the first input value and the second input value correspond to a same input sample; third data determined based on an average value, a maximum value, or a minimum value of first data corresponding to at least two frequency domain units; fourth data determined based on an average value, a maximum value, or a minimum value of second data corresponding to at least two frequency domain units; a relevant value for calculating first data; or a relevant value for calculating second data.

In some embodiments, the relevant value for calculating the first data includes at least one of: the input sample, or the first input value; and the relevant value for calculating the second data includes at least one of: the input sample, or the second input value.

In some embodiments, the first model is a CSI compression model, and the second model is a CSI recovery model.

In some embodiments, data N of the at least two frequency domain units are configured by the network device, or predefined by a communication protocol.

In some embodiments, the apparatus further includes: an operation module 1220 configured to perform a management operation on the AI model based on the performance monitoring value of the second model, or perform a management operation on the AI model based on performance monitoring indication information, where the management operation on the AI model includes a switching operation on the AI model, an activation operation on the AI model, a deactivation operation on the AI model, and falling back to a traditional communication operation without using the AI model.

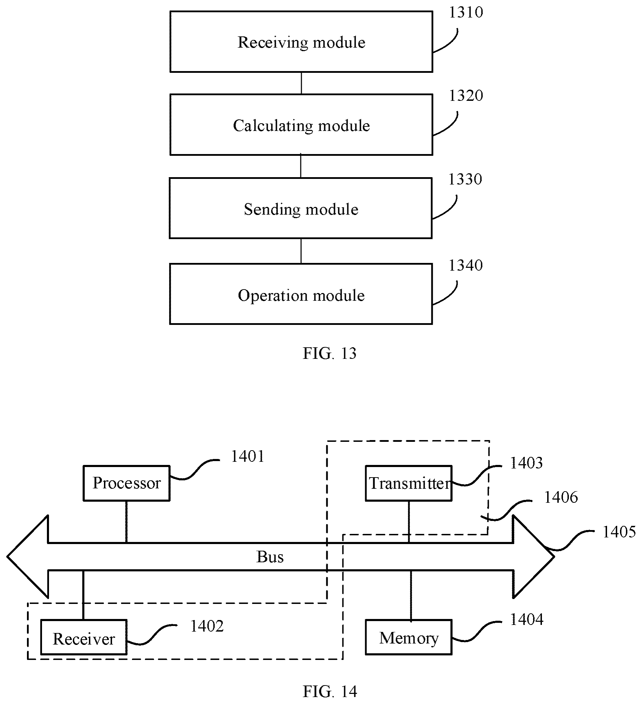

FIG. 13 shows a block diagram of an apparatus for monitoring a performance of an AI model provided in an illustrative embodiment of the present disclosure. The apparatus has the function of implementing the abovementioned method example at the network device side, and the function may be implemented by hardware or by executing corresponding software by hardware. As shown in FIG. 13, the AI model includes a first model deployed in a terminal and a second model deployed in the apparatus, and the apparatus includes: a receiving module 1310 configured to receive relevant information for calculating a performance monitoring value of the second model reported by the terminal; and a calculating module 1320 configured to calculate the performance monitoring value of the second model based on the relevant information.

In some embodiments, the relevant information for calculating the performance monitoring value includes at least one of: first data determined based on an inferred value of a first input value by the second model, where the inferred value is inferred by the second model in the network device, the first input value is an output value of the first model for an input sample, and the input sample is an input of the first model; second data determined based on an output value corresponding to a second input value in a case where the second model is not used, and the first input value and the second input value correspond to a same input sample; third data determined based on an average value, a maximum value, or a minimum value of first data corresponding to at least two frequency domain units; fourth data determined based on an average value, a maximum value, or a minimum value of second data corresponding to at least two frequency domain units; a relevant value for calculating first data; or a relevant value for calculating second data.

In some embodiments, the relevant value for calculating the first data includes at least one of: the input sample, or the first input value; and the relevant value for calculating the second data includes at least one of: the input sample, or the second input value.

In some embodiments, the first model is a CSI compression model, and the second model is a CSI recovery model.

In some embodiments, data N of the at least two frequency domain units are configured by the network device, or predefined by a communication protocol.

In some embodiments, the apparatus further includes: a sending module 1330 configured to send reporting indication information to the terminal.

In some embodiments, the apparatus further includes: an operation module 1340 configured to perform a management operation on the AI model based on the performance monitoring value of the second model, or perform a management operation on the AI model based on performance monitoring indication information, where the management operation on the AI model includes a switching operation on the AI model, an activation operation on the AI model, a deactivation operation on the AI model, and falling back to a traditional communication operation without using the AI model.

One point that needs to be explained is that the apparatus provided in the above embodiments only uses the division of the abovementioned functional modules as an example to implement its functions. In actual applications, the abovementioned functions may be assigned to different functional modules according to actual needs, that is, the content structure of the apparatus may be divided into different functional modules to complete all or some of the functions described above.

With respect to the apparatuses in the above embodiments, the specific manners for performing operations for individual modules therein have been described in detail in the embodiments regarding the methods, which are not elaborated herein.

Reference is made to FIG. 14, which shows a schematic block diagram of a communication device (a terminal or a network device) provided in an illustrative embodiment of the present disclosure. The communication device may include: a processor 1401, a receiver 1402, a transmitter 1403, a memory 1404 and a bus 1405.

The processor 1401 includes one or more processing cores. The processor 1401 executes various functional applications and global navigation satellite system (GNSS) measurements by running software programs and modules.

The receiver 1402 and the transmitter 1403 may be implemented as one transceiver 1406, and the transceiver 1406 may be a communication chip.

The memory 1404 is connected to the processor 1401 via the bus 1405.

The memory 1404 may be configured to store a computer program, and the processor 1401 is configured to execute the computer program to implement individual steps performed by the communication device in the above method embodiments.

Moreover, the memory 1404 may be implemented using any type of volatile or non-volatile storage devices, or a combination thereof. The volatile or non-volatile storage devices include, but are not limited to, a random-access memory (RAM), a read-only memory (ROM), an erasable programmable read-only memory (EPROM), an electrically erasable programmable read-only memory (EEPROM), a flash memory or other solid-state storage technologies; a compact disc read-only memory (CD-ROM), a digital video disc (DVD) or other optical storage devices; or tape cassettes, magnetic tapes, disk storage devices or other magnetic storage devices.

In a possible implementation, when the communication device is implemented as a terminal, the transceiver is configured to report a performance monitoring value of the second model, or to report relevant information for calculating a performance monitoring value of the second model.

In a possible implementation, when the communication device is implemented as a network device, the transceiver is configured to receive a performance monitoring value of the second model; or receive relevant information for calculating a performance monitoring value of the second model, and calculate the performance monitoring value of the second model based on the relevant information.

Embodiments of the present disclosure further provide a computer-readable storage medium, which has stored therein a computer program that, when executed by a transceiver of a core network device, causes the method for monitoring the performance of the AI model at the terminal side to be implemented.

Optionally, the computer-readable storage medium may include a read-only memory, a random access memory, a solid state drive (SSD), an optical disk, or the like. The random access memory may include a resistance random access memory (ReRAM) and a dynamic random access memory (DRAM).

Embodiments of the present disclosure further provide a chip, including a programmable logic circuit and/or program instructions, which are configured to implement the method for monitoring the performance of the AI model at the terminal side when the chip runs on a terminal.

Embodiments of the present disclosure further provide a computer program product or a computer program, which includes computer instructions stored in a computer-readable storage medium that, when read and executed by a processor of a terminal from the computer-readable storage medium, are configured to implement the method for monitoring the performance of the AI model at the terminal side described above.

It should be understood that the "indication" mentioned in the embodiments of the present disclosure may be a direct indication, an indirect indication, or an indication of an associated relationship. For example, A indicates B, which may mean that A directly indicates B, for example, B may be obtained through A; which may also mean that A indirectly indicates B, for example, A indicates C, and B may be obtained through C; which may also mean that there is an association relationship between A and B.

In the description of the embodiments of the present disclosure, the term "corresponding" may indicate a direct or indirect correspondence between two objects; or an association relationship between two objects; or a relationship of indicating and being indicated, configuring and being configured, or the like.

As used herein, "a plurality of" means two or more. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship.

In addition, the step numbers described herein only illustrate a possible execution order between the steps. In some other embodiments, the above steps may not be executed in the order of the numbers, for example, two steps with different numbers are executed at the same time, or two steps with different numbers are executed in the opposite order to that shown in the drawings, which is not limited in the embodiments of the present disclosure.

Those skilled in the art should be aware that in one or more of the above examples, the functions described in the embodiments of the present disclosure may be implemented by hardware, software, firmware, or any combination thereof. When the functions are implemented by software, the functions may be stored in a computer-readable medium, or transmitted as one or more instructions or codes on a computer-readable medium. The computer-readable medium includes computer storage media and communication media. The communication media includes any medium that facilitates the transfer of a computer program from one place to another. The computer storage media may be any available media that may be accessed by a general purpose or special purpose computer.

The above descriptions only involve illustrative embodiments of the present disclosure and are not intended to limit the present disclosure. Any modifications, equivalent substitutions, and improvements made within the spirit and principle of the present disclosure shall be included in the protection scope of the present disclosure.

**Claims**

1. A method for monitoring a performance of an artificial intelligence (AI) model, performed by a terminal, wherein the AI model comprises a first model and a second model, the terminal is deployed with the first model and the second model, and a network device is deployed with the second model, and the method comprises:
reporting a performance monitoring value of the second model, relevant information for calculating a performance monitoring value of the second model, or performance monitoring indication information to the network device.

2. The method according to claim 1, wherein the performance monitoring value of the second model comprises at least one of:

   the performance monitoring value determined based on first data and second data, wherein the first data is determined based on an inferred value of a first input value by the second model, the second data is determined based on an output value corresponding to a second input value in a case where the second model is not used, the first input value and the second input value correspond to a same input sample, the input sample is an input of the first model, and the first input value is an output value of the first model for the input sample; or
   the performance monitoring value determined based on third data and fourth data, wherein the third data is determined based on an average value, a maximum value or a minimum value of first data corresponding to at least two frequency domain units, and the fourth data is determined based on an average value, a maximum value or a minimum value of second data corresponding to at least two frequency domain units.

3. The method according to claim 1, wherein the relevant information for the performance monitoring value comprises at least one of:

   first data determined based on an inferred value of a first input value by the second model, wherein the first input value is an output value of the first model for an input sample, and the input sample is an input of the first model;
   second data determined based on an output value corresponding to a second input value in a case where the second model is not used, and the first input value and the second input value correspond to a same input sample;
   third data determined based on an average value, a maximum value, or a minimum value of first data corresponding to at least two frequency domain units;
   fourth data determined based on an average value, a maximum value, or a minimum value of second data corresponding to at least two frequency domain units;
   a relevant value for calculating first data; or
   a relevant value for calculating second data.

4. The method according to claim 2, wherein the inferred value is inferred by the second model in the terminal.

5. The method according to any one of claims 2 to 4, wherein

   the relevant value for calculating the first data comprises at least one of: the input sample, or the first input value; and
   the relevant value for calculating the second data comprises at least one of: the input sample, or the second input value.

6. The method according to any one of claims 2 to 4, wherein the first model is a channel status information (CSI) compression model, and the second model is a CSI recovery model.

7. The method according to claim 2, wherein data N of the at least two frequency domain units are configured by the network device, or predefined by a communication protocol.

8. A method for monitoring a performance of an artificial intelligence (AI) model, performed by a terminal, wherein the AI model comprises a first model and a second model, the terminal is deployed with the first model, and a network device is deployed with the second model, and the method comprises:
reporting relevant information for calculating a performance monitoring value of the second model to the network device.

9. The method according to claim 8, wherein the relevant information for the performance monitoring value comprises at least one of:

first data determined based on an inferred value of a first input value by the second model, wherein the inferred value is inferred by the second model in the network device, the first input value is an output value of the first model for an input sample, and the input sample is an input of the first model;
second data determined based on an output value corresponding to a second input value in a case where the second model is not used, and the first input value and the second input value correspond to a same input sample;
third data determined based on an average value, a maximum value, or a minimum value of first data corresponding to at least two frequency domain units;
fourth data determined based on an average value, a maximum value, or a minimum value of second data corresponding to at least two frequency domain units;
a relevant value for calculating first data; or
a relevant value for calculating second data.

10. The method according to claim 8 or 9, wherein

the relevant value for calculating the first data comprises at least one of: the input sample, or the first input value; and
the relevant value for calculating the second data comprises at least one of: the input sample, or the second input value.

11. The method according to claim 8 or 9, wherein the first model is a channel status information (CSI) compression model, and the second model is a CSI recovery model.

12. The method according to claim 9, wherein data N of the at least two frequency domain units are configured by the network device, or predefined by a communication protocol.

13. The method according to claim 8 or 9, wherein reporting the relevant information for calculating the performance monitoring value of the second model to the network device comprises:

reporting the relevant information for calculating the performance monitoring value of the second model to the network device in a case where reporting indication information sent by the network device is received; or
reporting the relevant information for calculating the performance monitoring value of the second model to the network device in a case where a target event is triggered.

14. The method according to claim 13, wherein

the target event is determined according to a data distribution corresponding to input data of the first model; or
the target event is determined according to a data distribution corresponding to output data of the first model.

15. A method for monitoring a performance of an artificial intelligence (AI) model, performed by a network device, wherein the AI model comprises a first model and a second model, a terminal is deployed with the first model and the second model, and the network device is deployed with the second model, and the method comprises:

receiving a performance monitoring value of the second model reported by the terminal; or
receiving relevant information for calculating a performance monitoring value of the second model, and calculating the performance monitoring value of the second model based on the relevant information; or
receiving performance monitoring indication information.

16. The method according to claim 15, wherein the performance monitoring value of the second model comprises at least one of:

the performance monitoring value determined based on first data and second data, wherein the first data is determined based on an inferred value of a first input value by the second model, the second data is determined based on an output value corresponding to a second input value in a case where the second model is not used, the first input value and the second input value correspond to a same input sample, the input sample is an input of the first model, and the first input value is an output value of the first model for the input sample; or

the performance monitoring value determined based on third data and fourth data, wherein the third data is determined based on an average value, a maximum value or a minimum value of first data corresponding to at least two frequency domain units, and the fourth data is determined based on an average value, a maximum value or a minimum value of second data corresponding to at least two frequency domain units.

17. The method according to claim 15, wherein the relevant information for the performance monitoring value comprises at least one of:

first data determined based on an inferred value of a first input value by the second model, wherein the first input value is an output value of the first model for an input sample, and the input sample is an input of the first model;

second data determined based on an output value corresponding to a second input value in a case where the second model is not used, and the first input value and the second input value correspond to a same input sample;

third data determined based on an average value, a maximum value, or a minimum value of first data corresponding to at least two frequency domain units;

fourth data determined based on an average value, a maximum value, or a minimum value of second data corresponding to at least two frequency domain units;

a relevant value for calculating first data; or

a relevant value for calculating second data.

18. The method according to any one of claims 15 to 17, wherein

the relevant value for calculating the first data comprises at least one of: the input sample, or the first input value; and

the relevant value for calculating the second data comprises at least one of: the input sample, or the second input value.

19. The method according to any one of claims 15 to 17, wherein the first model is a channel status information (CSI) compression model, and the second model is a CSI recovery model.

20. The method according to claim 16 or 17, wherein data $N$ of the at least two frequency domain units are configured by the network device, or predefined by a communication protocol.

21. The method according to any one of claims 15 to 17, further comprising:

performing a management operation on the AI model based on the performance monitoring value of the second model, or performing a management operation on the AI model based on performance monitoring indication information,

wherein the management operation on the AI model comprises a switching operation on the AI model, an activation operation on the AI model, a deactivation operation on the AI model, and falling back to a traditional communication operation without using the AI model.

22. A method for monitoring a performance of an artificial intelligence (AI) model, performed by a network device, wherein the AI model comprises a first model and a second model, a terminal is deployed with the first model, and the network device is deployed with the second model, and the method comprises:

receiving relevant information for calculating a performance monitoring value of the second model reported by the terminal; and

calculating the performance monitoring value of the second model based on the relevant information.

23. The method according to claim 22, wherein the relevant information for the performance monitoring value comprises at least one of:

first data determined based on an inferred value of a first input value by the second model, wherein the inferred value is inferred by the second model in the network device, the first input value is an output value of the first model for an input sample, and the input sample is an input of the first model;

second data determined based on an output value corresponding to a second input value in a case where the second model is not used, and the first input value and the second input value correspond to a same input sample;

third data determined based on an average value, a maximum value, or a minimum value of first data corresponding to at least two frequency domain units;

fourth data determined based on an average value, a maximum value, or a minimum value of second data corresponding to at least two frequency domain units;

a relevant value for calculating first data; or

a relevant value for calculating second data.

24. The method according to claim 22 or 23, wherein

the relevant value for calculating the first data comprises at least one of: the input sample, or the first input value; and

the relevant value for calculating the second data comprises at least one of: the input sample, or the second input value.

25. The method according to claim 22 or 23, wherein the first model is a channel status information (CSI) compression model, and the second model is a CSI recovery model.

26. The method according to claim 23, wherein data N of the at least two frequency domain units are configured by the network device, or predefined by a communication protocol.

27. The method according to claim 22 or 23, before receiving the relevant information for calculating the performance monitoring value of the second model reported by the terminal, further comprising:
sending reporting indication information to the terminal.

28. The method according to claim 22 or 23, further comprising:

performing a management operation on the AI model based on the performance monitoring value of the second model, or performing a management operation on the AI model based on performance monitoring indication information,

wherein the management operation on the AI model comprises a switching operation on the AI model, an activation operation on the AI model, a deactivation operation on the AI model, and falling back to a traditional communication operation without using the AI model.

29. An apparatus for monitoring a performance of an artificial intelligence (AI) model, wherein the AI model comprises a first model and a second model that are deployed in the apparatus, the second model is deployed in a network device, and the apparatus comprises:
a reporting module configured to report a performance monitoring value of the second model, relevant information for calculating a performance monitoring value of the second model, or performance monitoring indication information to the network device.

30. An apparatus for monitoring a performance of an artificial intelligence (AI) model, wherein the AI model comprises a first model deployed in the apparatus and a second model deployed in a network device, and the apparatus comprises:
a reporting module configured to report relevant information for calculating a performance monitoring value of the second model to the network device.

31. An apparatus for monitoring a performance of an artificial intelligence (AI) model, wherein the AI model comprises a first model and a second model that are deployed in a terminal, the second model is deployed in the apparatus, and the apparatus comprises:

a receiving module configured to receive a performance monitoring value of the second model reported by the terminal; or

a receiving module further configured to receive relevant information for calculating a performance monitoring value of the second model, and calculate the performance monitoring value of the second model based on the relevant information; or

a receiving module further configured to receive performance monitoring indication information.

32. An apparatus for monitoring a performance of an artificial intelligence (AI) model, wherein the AI model comprises a first model deployed in a terminal and a second model deployed in the apparatus, and the apparatus comprises:

a receiving module configured to receive relevant information for calculating a performance monitoring value of the second model reported by the terminal; and

a calculating module configured to calculate the performance monitoring value of the second model based on the relevant information.

33. A terminal, comprising:

a processor; and

a transceiver connected to the processor,

wherein the processor is configured to load and execute executable instructions to implement the method for monitoring the performance of the AI model according to any one of claims 1 to 14.

34. A network device, comprising:

a processor; and

a transceiver connected to the processor,

wherein the processor is configured to load and execute executable instructions to implement the method for monitoring the performance of the AI model according to any one of claims 15 to 28.

35. A computer-readable storage medium having stored therein at least one program that, when loaded and executed by a processor causes the method for monitoring the performance of the AI model according to any one of claims 1 to 28 to be implemented.

36. A chip, comprising a programmable logic circuit and/or program instructions, which are configured to implement the method for monitoring the performance of the AI model according to any one of claims 1 to 28 when the chip runs.

Terminal 110

Downlink channel information $H$ →

CSI compression model  111

— Binary bit stream $s$ →

Network device 120  112

CSI recovery model

Recovered downlink channel information $H'$ →

FIG. 1

Access network 22

220

24

Access network 22

220

Core network device 26

FIG. 2

Reporting a performance monitoring value of the second model, relevant information for calculating a performance monitoring value of the second model, or performance monitoring indication information to the network device

301

FIG. 3

Reporting relevant information for calculating a performance monitoring value of the second model to the network device — 401

FIG. 4

Receiving an inferred value sent by a network device — 501

Reporting relevant information for calculating a performance monitoring value of the second model to the network device — 502

FIG. 5

Receiving a performance monitoring value of the second model reported by the terminal — 601

Receiving relevant information for calculating a performance monitoring value of the second model — 602

Receiving performance monitoring indication information — 604

Calculating the performance monitoring value of the second model based on the relevant information — 603

FIG. 6

Receiving relevant information for calculating a performance monitoring value of the second model reported by the terminal — 701

Calculating the performance monitoring value of the second model based on the relevant information — 702

FIG. 7

Terminal

Network device

801, Reporting a performance monitoring value of the second model, relevant information for calculating a performance monitoring value of the second model, or performance monitoring indication information to the network device

FIG. 8

Terminal

Network device

901, Reporting, by the terminal, relevant information for calculating a performance monitoring value of the second model to the network device

FIG. 9

Reporting module                                    1010

FIG. 10

Reporting module                                    1110

Reporting unit 1111

FIG. 11

Receiving module                                    1210

FIG. 12

Receiving module — 1310

Calculating module — 1320

Sending module — 1330

Operation module — 1340

FIG. 13

Processor — 1401

Transmitter — 1403

— 1406

— 1405

Bus

Receiver — 1402

Memory — 1404

FIG. 14

## INTERNATIONAL SEARCH REPORT

| International application No. |
|---|
| **PCT/CN2023/076971** |

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 编码器, 解码器, 人工智能, 神经网络, 信道状态信息, 压缩, 性能, 检测, 监测, 模型, 余弦相似度, 更新, CSI, coder, compress, indicate, AI, neural network, model, monitor, update

**C. DOCUMENTS CONSIDERED TO BE RELEVANT**

| Category* | Citation of document, with indication, where appropriate, of the relevant passages | Relevant to claim No. |
|---|---|---|
| A | CN 115280688 A (BEIJING XIAOMI MOBILE SOFTWARE CO., LTD.) 01 November 2022 (2022-11-01)<br> description, paragraphs [0138] and [0139], and figure 2 | 1-36 |
| A | WO 2021217519 A1 (HUAWEI TECHNOLOGIES CO., LTD.) 04 November 2021 (2021-11-04)<br> entire document | 1-36 |
| A | CN 115087038 A (EAST CHINA NORMAL UNIVERSITY) 20 September 2022 (2022-09-20)<br> entire document | 1-36 |
| A | CN 115443643 A (BEIJING XIAOMI MOBILE SOFTWARE CO., LTD.) 06 December 2022 (2022-12-06)<br> entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 October 2023** | **09 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/076971** |

| Patent document<br>cited in search report | | | Publication date<br>(day/month/year) | Patent family member(s) | Publication date<br>(day/month/year) |
| --- | --- | --- | --- | --- | --- |
| CN | 115280688 | A | 01 November 2022 | None | |
| WO | 2021217519 | A1 | 04 November 2021 | None | |
| CN | 115087038 | A | 20 September 2022 | None | |
| CN | 115443643 | A | 06 December 2022 | None | |

Form PCT/ISA/210 (patent family annex) (July 2022)